# EUROPÄISCHE PATENTSCHRIFT

(11) **EP 3 519 227 B1**
(45) Veröffentlichungstag und Bekanntmachung des Hinweises auf die Patenterteilung: **28.07.2021**
(21) Anmeldenummer: 17768799.3
(22) Anmeldetag: 19.09.2017
(51) Int. Cl.: B60K 17/16, B60K 17/24

(54) **ACHSGETRIEBE FÜR EIN KRAFTFAHRZEUG**
AXLE GEARING FOR A MOTOR VEHICLE
ENGRENAGE D'ESSIEU POUR UN VÉHICULE AUTOMOBILE

(30) Priorität: 28.09.2016 DE 102016218727
(43) Veröffentlichungstag der Anmeldung: 07.08.2019
(73) Patentinhaber: Audi AG, 85045 Ingolstadt (DE)
(72) Erfinder: MEIXNER, Christian, 85049 Ingolstadt (DE)
(86) Internationale Anmeldenummer: PCT/EP2017/073577
(87) Internationale Veröffentlichungsnummer: WO 2018/060001

(56) Entgegenhaltungen:
- EP-A2- 2 368 742
- DE-A1- 2 937 594
- DE-A1- 3 710 582
- DE-A1-102006 038 358
- DE-A1-102014 013 574
- DE-A1-102014 016 077
- DE-B- 1 059 299
- US-A1- 2013 055 833

## Beschreibung

Die Erfindung betrifft ein Achsgetriebe für ein Kraftfahrzeug, mit einer ersten Eingangswelle, einer zweiten Eingangswelle, einer ersten Ausgangswelle und einer zweiten Ausgangswelle, wobei die erste Eingangswelle mit der ersten Ausgangswelle mittels eines ersten Tellerradgetriebes und die zweite Eingangswelle mit der zweiten Ausgangswelle mittels eines zweiten Tellerradgetriebes permanent gekoppelt ist, wobei die erste Eingangswelle und die zweite Eingangswelle koaxial zueinander angeordnet sind und die erste Ausgangswelle und die zweite Ausgangswelle sich ausgehend von dem jeweiligen Tellerradgetriebe in gegenüberliegende Richtungen erstrecken, wobei eine Achsebene die Drehachsen der Eingangswellen in sich aufnimmt und eine auf der Achsebene senkrecht stehende Ebene mit den Drehachsen der Ausgangswellen jeweils einen Winkel von mindestens 75° und höchstens 90° einschließt.

Das Achsgetriebe ist einer Achse des Kraftfahrzeugs, beispielsweise also einer Vorderachse, bevorzugt jedoch einer Hinterachse des Kraftfahrzeugs zugeordnet. Mithilfe des Achsgetriebes wird ein Drehmoment von einer Antriebseinrichtung des Kraftfahrzeugs an Räder des Kraftfahrzeugs übertragen. Anders ausgedrückt ist über das Achsgetriebe eine Wirkverbindung zwischen der Antriebseinrichtung des Kraftfahrzeugs und der Achse beziehungsweise deren Rädern hergestellt oder zumindest herstellbar. Die Antriebseinrichtung ist mit der ersten Eingangswelle und der zweiten Eingangswelle permanent gekoppelt oder zumindest koppelbar. Beispielsweise liegt die Wirkverbindung zwischen der Antriebseinrichtung und den beiden Eingangswellen über eine von dem Achsgetriebe verschiedene Getriebeeinrichtung vor. Die Getriebeeinrichtung kann beispielsweise als Differentialgetriebe, insbesondere als Achsdifferentialgetriebe, ausgestaltet sein. Die beiden Eingangswellen können insoweit als Kardanwellen vorliegen oder zumindest mit Kardanwellen gekoppelt sein, insbesondere permanent.

Beispielsweise sind die beiden Eingangswellen des Achsgetriebes permanent mit den Ausgangswellen der Getriebeeinrichtung gekoppelt, insbesondere starr. Die beiden Ausgangswellen des Achsgetriebes sind radseitig vorgesehen, also hinsichtlich eines Drehmomentflusses auf einer der Antriebseinrichtung abgewandten Seite der Tellerradgetriebe angeordnet. Die erste Ausgangswelle ist beispielsweise einem ersten Rad der Achse und die zweite Ausgangswelle wenigstens einem zweiten Rad derselben Achse zugeordnet, insbesondere permanent und/oder starr mit ihm gekoppelt. Selbstverständlich kann es jedoch vorgesehen sein, dass die Wirkverbindung zwischen der ersten Ausgangswelle und dem ersten Rad und/oder die Wirkverbindung zwischen der zweiten Ausgangswelle und dem zweiten Rad zumindest zeitweise unterbrechbar ist. Zu diesem Zweck kann in den Wirkverbindungen jeweils eine Schaltkupplung, beispielsweise eine Klauenkupplung, vorgesehen sein.

Innerhalb des Achsgetriebes ist die erste Eingangswelle permanent mit der ersten Ausgangswelle und die zweite Eingangswelle permanent mit der zweiten Ausgangswelle gekoppelt. Hierzu dienen das erste Tellerradgetriebe und das zweite Tellerradgetriebe. Mithilfe der Tellerradgetriebe wird eine Anordnung der Eingangswellen und der Ausgangswellen angewinkelt zueinander erreicht. Beispielsweise kann es dabei vorgesehen sein, dass die Tellerradgetriebe jeweils einen Hypoidversatz aufweisen, sodass die Ausgangswellen bezüglich der Eingangswellen versetzt angeordnet sind, insbesondere windschief zu diesen vorliegen, also beabstandet parallel von ihnen angeordnet sind. Dies führt jedoch zu einem großen Bauraumbedarf des Achsgetriebes.

Aus dem Stand der Technik ist beispielsweise die Druckschrift DE 10 2014 016 077 A1 bekannt. Diese betrifft eine Getriebeeinrichtung für ein Kraftfahrzeug, die eine mit einem Antriebsaggregat wirkverbindbare Eingangswelle sowie eine erste Ausgangswelle und eine zweite Ausgangswelle aufweist, wobei die erste Ausgangswelle über ein erstes Winkelgetriebe mit einer ersten Teilwelle einer Radachse und die zweite Ausgangswelle über ein zweites Winkelgetriebe mit einer zweiten Teilwelle der Radachse wirkverbindbar oder wirkverbunden ist. Dabei ist vorgesehen, dass die Getriebeeinrichtung ein Differenzialgetriebe aufweist, über das die erste Ausgangswelle und die zweite Ausgangswelle permanent mit der Eingangswelle wirkverbunden sind, und dass die Getriebeeinrichtung über eine elektrische Maschine verfügt, die über eine erste Kupplung und mit einer ersten Übersetzung mit der Eingangswelle und über eine zweite Kupplung und mit einer zweiten Übersetzung mit einem Drehmomentaufteilungsgetriebe der Getriebeeinrichtung wirkverbindbar ist.

Weiterhin sind Achsgetriebe für Kraftfahrzeuge aus der DE 37 10 582 A1, der DE 1 059 299 B und der DE 29 37 594 A1 bekannt.

Es ist Aufgabe der Erfindung, ein Achsgetriebe für ein Kraftfahrzeug vorzuschlagen, welches gegenüber bekannten Achsgetrieben Vorteile aufweist, insbesondere einen geringeren Bauraumbedarf aufweist.

Dies wird erfindungsgemäß mit einem Achsgetriebe mit den Merkmalen des Anspruchs 1 erzielt. Dabei ist vorgesehen, dass, in einem Getriebegehäuse des Achsgetriebes ein an dem Getriebegehäuse befestigtes Lagerelement angeordnet ist, das einen ersten Lagervorsprung und einen zweiten Lagervorsprung aufweist, wobei auf dem ersten Lagervorsprung ein mit der ersten Ausgangswelle starr verbundenes erstes Tellerrad des ersten Tellerradgetriebes und auf dem zweiten Lagervorsprung ein mit der zweiten Ausgangswelle starr verbundenes zweites Tellerrad des zweiten Tellerradgetriebes gelagert ist.

Insgesamt ist also zunächst eine spezielle Anordnung der Eingangswellen und der Ausgangswellen vorgesehen. Diese ermöglicht wiederum eine spezielle Lagerung der Tellerräder, nämlich des ersten Tellerrads und des zweiten Tellerrads, an dem Lagerelement. Zunächst sind die beiden Eingangswellen koaxial zueinander angeordnet. Beispielsweise verläuft die zweite Eingangswelle in der ersten Eingangswelle oder umgekehrt. Die beiden Ausgangswellen liegen sich im Wesentlichen gegenüber, insbesondere bezüglich der Symmetrieebene, und erstrecken sich ausgehend von dem jeweiligen Tellerradgetriebe in gegenüberliegende Richtungen, vorzugsweise jeweils in die Richtung des entsprechenden Rads des Kraftfahrzeugs.

Sowohl die Drehachse der ersten Ausgangswelle als auch die Drehachse der zweiten Ausgangswelle schneidet beispielsweise die beiden Drehachsen der Eingangswellen beziehungsweise die gemeinsame Drehachse der Eingangswelle. Anders ausgedrückt ist es vorgesehen, dass Drehachsen der Ausgangswellen jeweils die Drehachsen der Eingangswellen schneiden. Entsprechend können die Tellerradgetriebe ohne Hypoidversatz ausgebildet sein. Auch eine Ausgestaltung mit Hypoidversatz ist jedoch realisierbar, bei welcher folglich wenigstens die Drehachse einer der Ausgangswellen die Drehachsen der Eingangswellen nicht schneiden. Vorzugsweise schneiden jedoch in diesem Fall die Drehachsen beider Ausgangswellen die Drehachsen der Eingangswellen nicht. Somit liegt insgesamt eine windschiefe Anordnung der Drehachsen der Ausgangswellen bezüglich der Drehachsen der Eingangswellen vor.

Zusätzlich ist es nun vorgesehen, dass die (gedachte) Achsebene die Drehachsen der Eingangswellen in sich aufnimmt. Die Achsebene ist bezüglich einer Einbaulage des Achsgetriebes im Wesentlichen waagerecht angeordnet. Entsprechend liegt die auf der Achsebene senkrecht stehende Ebene, welche ebenfalls die Drehachsen der Eingangswellen in sich aufnimmt, als Vertikalebene vor, ist also in Einbaulage des Achsgetriebes im Wesentlichen senkrecht angeordnet. Die auf der Achsebene senkrecht stehende Ebene schließt wenigstens im Schnitt, nämlich insbesondere im Querschnitt bezüglich der Drehachsen der Eingangswellen gesehen, mit den Drehachsen der Ausgangswellen jeweils einen Winkel von mindestens 75° und höchstens 90° ein.

Jede der Drehachsen schließt also mit der Ebene einen Winkel ein, der die genannten Voraussetzungen erfüllt. Die Winkel zwischen den Drehachsen und der Ebene können identisch, alternativ jedoch voneinander verschieden sein. Beispielsweise beträgt der Winkel beziehungsweise betragen die Winkel mindestens 75° und höchstens 90°. Bevorzugt betragen der Winkel beziehungsweise die Winkel mindestens 80°, mindestens 85°, mindestens 86°, mindestens 87°, mindestens 88° oder mindestens 89°, stets jedoch höchstens 90°. Das bedeutet, dass der Winkel beziehungsweise die Winkel genau gleich 90° oder auch kleiner als 90° sein können.

Zusätzlich oder alternativ liegt die auf der Achsebene senkrecht stehende Ebene wenigstens im Schnitt, nämlich insbesondere im Querschnitt bezüglich der Drehachsen der Eingangswellen gesehen, als Symmetrieebene für die Drehachsen der Ausgangswellen vor. Die Drehachsen der Ausgangswellen sind in diesem Fall insoweit hinsichtlich der Symmetrieebene symmetrisch zueinander angeordnet beziehungsweise ausgerichtet.

Um das Achsgetriebe besonders kompakt auszugestalten, ist in dem Getriebegehäuse das Lagerelement angeordnet. Das Lagerelement weist die beiden Lagervorsprünge, nämlich den ersten Lagervorsprung und den zweiten Lagervorsprung, auf. Die Lagervorsprünge dienen der Lagerung von Tellerrädern der beiden Tellerradgetriebe. Auf dem ersten Lagervorsprung ist insoweit das erste Tellerrad des ersten Tellerradgetriebes und auf dem zweiten Lagervorsprung das zweite Tellerrad des zweiten Tellerradgetriebes gelagert.

Die Lagerung ist vorzugsweise unmittelbar ausgestaltet, sodass das jeweilige Tellerrad auf dem entsprechenden Lagervorsprung aufsitzt. Es kann jedoch alternativ eine lediglich mittelbare Lagerung vorgesehen sein, bei welcher beispielsweise die Tellerräder über die jeweilige Ausgangswelle auf dem Lagervorsprung gelagert sind. Bei einer derartigen Ausgestaltung ist die Ausgangswelle unmittelbar auf beziehungsweise an dem Lagervorsprung gelagert. Die Lagerung des jeweiligen Tellerrads ist nur mittelbar über die Ausgangswelle vorgesehen. Das Tellerrad kann hierbei beispielsweise in axialer Richtung bezüglich seiner Drehachse beziehungsweise der Drehachse der Ausgangswelle von dem Lagervorsprung beabstandet angeordnet sein. Das erste Tellerrad ist starr mit der ersten Ausgangswelle verbunden oder alternativ einstückig mit ihr ausgestaltet. Dies kann analog auch für das zweite Tellerrad sowie die zweite Ausgangswelle vorgesehen sein.

Das Lagerelement ist eine separat von dem Getriebegehäuse ausgebildete Einrichtung. Zunächst werden also das Getriebegehäuse und das Lagerelement getrennt voneinander hergestellt und nachfolgend das Lagerelement an beziehungsweise in dem Getriebegehäuse angeordnet. Bevorzugt wird das Lagerelement zentral in dem Getriebegehäuse angeordnet, insbesondere zentral bezüglich der Drehachsen der beiden Eingangswellen gesehen. Insbesondere verlaufen die Drehachsen der beiden Eingangswellen durch das Lagerelement hindurch, schneiden dieses also. Um eine einfache Anordnung des Lagerelements in dem Getriebegehäuse zu ermöglichen, ist dieses mehrteilig ausgestaltet und weist hierzu eine erste Gehäuseschale und eine zweite Gehäuseschale auf. Die beiden Lagervorsprünge sind beispielsweise im Querschnitt bezüglich ihrer jeweiligen Längsmittelachse rund und gehen in axialer Richtung bevorzugt von einem Zentraldom des Lagerelements aus. Auf ihrem dem Zentraldom abgewandten Ende verfügen die Lagervorsprünge jeweils bevorzugt über ein freies Ende.

Die Erfindung sieht vor, dass die Drehachsen der beiden Eingangswellen und die Drehachsen der beiden Ausgangswellen in der Achsebene liegen. Dies stellt eine besonders vorteilhafte Ausrichtung der Eingangswellen und der Ausgangswellen dar, welche eine äußerst kompakte Ausgestaltung des Achsgetriebes zulässt. Sind sowohl die Eingangswellen als auch die Ausgangswellen in der Achsebene angeordnet, so kann auf die vorstehend beschriebene Definition unter Verwendung der Symmetrieebene verzichtet werden. Diese ist insoweit nicht mehr für die Definition der Achsebene notwendig.

Eine weitere Ausführungsform der Erfindung sieht vor, dass der erste Lagervorsprung in Richtung einer ersten Austrittsausnehmung des Getriebegehäuses und der zweite Lagervorsprung in Richtung einer zweiten Austrittsausnehmung des Getriebegehäuses ragt oder in diese hineinragt. Dem ersten Lagervorsprung ist insoweit die erste Austrittsausnehmung und dem zweiten Lagervorsprung die zweite Austrittsausnehmung zugeordnet. Die erste Austrittsausnehmung wird vorzugsweise von dem ersten Lagervorsprung und/oder der ersten Ausgangswelle durchgriffen. Insbesondere ragen der erste Lagervorsprung und/oder die erste Ausgangswelle durch die Austrittsausnehmung aus dem Getriebegehäuse heraus. Dies kann analog für die zweite Austrittsausnehmung einerseits sowie den zweiten Lagervorsprung und die zweite Ausgangswelle andererseits der Fall sein.

Insoweit kann es vorgesehen sein, dass die zweite Austrittsausnehmung von dem zweiten Lagervorsprung und/oder der zweiten Ausgangswelle durchgriffen wird, sodass der zweite Lagervorsprung und/oder die zweite Ausgangswelle durch die zweite Austrittsausnehmung aus dem Getriebegehäuse herausragt. Die beiden Austrittsausnehmungen sind in dem Getriebegehäuse ausgebildet. Insbesondere liegen beide Austrittsausnehmungen als randgeschlossene Ausnehmungen in dem Getriebegehäuse vor, verfügen also in zumindest einer Richtung über einen durchgehenden Rand. Ist das Getriebegehäuse mehrteilig ausgestaltet, so liegt jede der Austrittsausnehmungen vorzugsweise teilweise in der ersten Gehäuseschale und teilweise in der zweiten Gehäuseschale vor, sodass die beiden Gehäuseschalen jede der Austrittsausnehmungen zumindest bereichsweise ausbilden beziehungsweise begrenzen. Entsprechend begrenzen die Gehäuseschalen die Austrittsausnehmungen jeweils gemeinsam.

Eine Weiterbildung der Erfindung sieht vor, dass das Getriebegehäuse eine erste Gehäuseschale und eine zweite Gehäuseschale aufweist, die separat voneinander ausgebildet sind und in einer Kontaktebene aneinander anliegen, die in der Achsebene oder parallel zu dieser liegt. Insoweit soll die vorstehend bereits angedeutete mehrteilige Ausgestaltung des Getriebegehäuses realisiert sein. Hierzu weist das Getriebegehäuse die erste Gehäuseschale und die zweite Gehäuseschale auf. Die bereits beschriebene Anordnung beziehungsweise Ausrichtung der Eingangswellen und der Ausgangswellen ermöglicht eine Teilung des Getriebegehäuses in die erste Gehäuseschale und die zweite Gehäuseschale in einer bezüglich der Einbaulage des Getriebes im Wesentlichen waagerechten Ebene, welche nachfolgend als Kontaktebene bezeichnet wird. Diese Kontaktebene liegt in der Achsebene oder parallel zu dieser. Im Rahmen dieser Beschreibung wird insoweit nicht auf die waagerechte Ausrichtung der Kontaktebene, sondern vielmehr auf ihre Lage bezüglich der Achsebene abgestellt, um eine in sich geschlossene Definition für das Achsgetriebe zu erzielen.

Die erste Gehäuseschale und die zweite Gehäuseschale liegen in der Kontaktebene aneinander an beziehungsweise treffen in der Kontaktebene aufeinander. Bevorzugt liegt die erste Gehäuseschale nun mit einer ersten Kontaktfläche an einer zweiten Kontaktfläche der zweiten Gehäuseschale an. Die erste Kontaktfläche und die zweite Kontaktfläche sind vorzugsweise eben beziehungsweise plan. Besonders bevorzugt liegen sowohl die erste Kontaktfläche als auch die zweite Kontaktfläche jeweils bereichsweise auf gegenüberliegenden Seiten der Symmetrieebene vor. Die Kontaktflächen liegen dabei bevorzugt jeweils vollständig in der Kontaktebene, werden jedoch von dieser geschnitten.

Im Rahmen einer bevorzugten Ausgestaltung der Erfindung ist vorgesehen, dass die erste Gehäuseschale und die zweite Gehäuseschale mittels einer Schraube miteinander verschraubt sind, wobei eine Längsmittelachse der Schraube bezüglich der Kontaktebene angewinkelt ist, insbesondere senkrecht auf ihr steht. Die Schraube greift sowohl in die erste Gehäuseschale als auch in die zweite Gehäuseschale ein. Beispielsweise liegt ein Kopf der Schraube an einer ersten der Gehäuseschalen an, nämlich auf der der jeweils anderen Gehäuseschale abgewandten Seite. Ein von dem Kopf beabstandetes Gewinde der Schraube greift dagegen in die andere der Gehäuseschalen ein, sodass diese zuverlässig aneinander gehalten sind. Besonders bevorzugt ist selbstverständlich eine Vielzahl von derartigen Schrauben vorgesehen, welche beabstandet voneinander an dem Getriebegehäuse vorliegen.

Die Längsmittelachse der Schraube ist bezüglich der Kontaktebene angewinkelt. Besonders bevorzugt steht sie senkrecht auf ihr. Eine derartige Ausgestaltung ermöglicht ein besonders kompaktes Achsgetriebe, weil keine nach oben und nach unten überstehenden Befestigungsflansche an den Gehäuseschalen notwendig sind, um die beiden Gehäuseschalen aneinander zu befestigen. Vielmehr können die Befestigungsflansche seitlich an dem Getriebegehäuse vorliegen, insbesondere in der Kontaktebene oder parallel zu dieser. Entsprechend kann auch die Schraube in der Kontaktebene vorliegen beziehungsweise durch diese hindurchtreten. Bevorzugt steht also nicht nur die Längsmittelachse der Schraube senkrecht auf der Kontaktebene. Vielmehr verläuft die Kontaktebene durch die Schraube.

Eine Weiterbildung der Erfindung sieht vor, dass die erste Gehäuseschale eine in der Kontaktebene liegende plane erste Anlagefläche und die zweite Gehäuseschale eine in der Kontaktebene liegende plane zweite Anlagefläche aufweist, wobei die erste Anlagefläche und die zweite Anlagefläche flächig aneinander anliegen. Die Gehäuseschalen sind aneinander anliegend angeordnet. Dabei liegen die beiden Anlagenflächen der Gehäuseschalen miteinander in Berührkontakt. Sowohl die erste Anlagefläche als auch die zweite Anlagefläche ist plan. Sie liegen dabei bevorzugt jeweils vollständig in der Kontaktebene. Beispielsweise liegt die gesamte erste Anlagefläche an der zweiten Anlagefläche und/oder umgekehrt an. Insbesondere liegt also die gesamte erste Anlagefläche an der gesamten zweiten Anlagefläche an, sodass ein vollflächiger Kontakt zwischen den Anlageflächen hergestellt ist.

Alternativ können die erste Anlagefläche und die zweite Anlagefläche jeweils plan sein und jeweils in einer gedachten Ebene liegen. Beide dieser gedachten Ebenen sollen nun gegenüber der Kontaktebene angewinkelt sein, also mit dieser einen Winkel einschließen, der größer als 0° und kleiner als 90° ist. Bevorzugt ist der Winkel deutlich kleiner als 90°, beispielsweise beträgt er höchstens 80°, höchstens 70°, höchstens 60°, höchstens 50°, höchstens 45°, höchstens 40° oder höchstens 30°.

Eine weitere bevorzugte Ausführungsform der Erfindung sieht vor, dass die Schraube die erste Anlagefläche und/oder die zweite Anlagefläche durchgreift. Die beiden Anlageflächen werden nach der Montage des Getriebegehäuses insoweit von der Schraube aneinander gehalten beziehungsweise gegeneinander gedrängt. Die Schraube ist dabei nicht etwa beabstandet von den Anlageflächen angeordnet, beispielsweise an einem von den Anlageflächen separaten Befestigungsflansch. Vielmehr ist die Schraube in einem Schraubloch angeordnet, welches die erste Anlagefläche und/oder die zweite Anlagefläche durchgreift, vorzugsweise jeweils randgeschlossen.

Die Erfindung sieht vor, dass das Lagerelement einerseits an der ersten Gehäuseschale und andererseits an der zweiten Gehäuseschale befestigt ist, und zwar auf gegenüberliegenden Seiten der Kontaktebene, insbesondere jeweils mittels wenigstens einer Schraube, deren Längsmittelachse bezüglich der Kontaktebene angewinkelt ist und/oder das senkrecht auf ihr steht. Vorstehend wurde bereits erläutert, dass das Lagerelement an dem Getriebegehäuse befestigt ist. Die Befestigung soll dabei nicht ausschließlich an einer der Gehäuseschalen, sondern vielmehr an beiden Gehäuseschalen vorliegen. Somit ist das Lagerelement auf gegenüberliegenden Seiten der Kontaktebene an der ersten Gehäuseschale und der zweiten Gehäuseschale befestigt.

Die Befestigung des Lagerelements an der ersten Gehäuseschale ist insoweit auf einer ersten Seite der Kontaktebene und die Befestigung des Lagerelements an der zweiten Gehäuseschale auf einer der ersten Seite gegenüberliegenden zweiten Seite der Kontaktebene realisiert. Zusätzlich oder alternativ kann es vorgesehen sein, dass die Befestigung des Lagerelements an der ersten Gehäuseschale und/oder der zweiten Gehäuseschale (jeweils) mittels wenigstens einer Schraube realisiert ist. Die Längsmittelachse der Schraube beziehungsweise die Längsmittelachsen der Schrauben sollen nun bezüglich der Kontaktebene angewinkelt sein, also mit ihr einen Winkel einschließen, der größer als 0° und kleiner als 180° ist. Besonders bevorzugt steht die Längsmittelachse beziehungsweise stehen die Längsmittelachsen senkrecht auf der Kontaktebene, sodass ein Winkel von 90° vorliegt.

Eine weitere Ausführungsform der Erfindung sieht vor, dass das Lagerelement beidseitig einer gedachten Ebene, die senkrecht auf der Kontaktebene angeordnet ist und einen Schnittpunkt der Ausgangswellen mit den Drehachsen der Eingangswellen in sich aufnimmt, jeweils an der ersten Gehäuseschale und/oder der zweiten Gehäuseschale befestigt ist. Die gedachte Ebene steht senkrecht auf der Kontaktebene und nimmt den Schnittpunkt in sich auf. Zusätzlich oder alternativ liegen die Drehachsen der beiden Eingangswellen in der gedachten Ebene. Die gedachte Ebene liegt insoweit als Vertikalebene bezüglich einer Einbaulage des Achsgetriebes vor. Dies wird beispielsweise erzielt, indem die vorstehend beschriebenen Schrauben beidseitig der gedachten Ebene vorliegen. Insbesondere liegt die Längsmittelachse der Schraube in der gedachten Ebene.

Zusätzlich oder alternativ kann es vorgesehen sein, dass das Lagerelement beidseitig der gedachten Ebene jeweils an der ersten Gehäuseschale oder der zweiten Gehäuseschale anliegt. Besonders bevorzugt stützt sich also das Lagerelement beidseitig der Ebene an der ersten Gehäuseschale ab. Zusätzlich oder alternativ stützt es sich beidseitig der Ebene an der zweiten Gehäuseschale ab.

Eine weitere bevorzugte Ausführungsform der Erfindung sieht vor, dass die erste Eingangswelle und die zweite Eingangswelle sowie die erste Ausgangswelle und die zweite Ausgangswelle jeweils an und/oder in dem Getriebegehäuse gelagert sind. Zur Lagerung der Eingangswellen sowie der Ausgangswellen sind Lager vorgesehen, welche bezüglich des Getriebegehäuses fest angeordnet sind. Jeder Welle ist beispielsweise eines dieser Lager zugeordnet. Es kann jedoch auch vorgesehen sein, dass sowohl die erste Ausgangswelle als auch die zweite Ausgangswelle jeweils mittels eines ersten Lagers und mittels eines zweiten Lagers gelagert sind.

Die beiden Lager können grundsätzlich beliebig zueinander angeordnet sein, insbesondere sind sie in axialer Richtung bezüglich der jeweiligen Drehachse der entsprechenden Ausgangswelle beabstandet zueinander angeordnet. Das erste Lager und das zweite Lager können beispielsweise in O-Anordnung, in Tandemanordnung oder in X-Anordnung zueinander angeordnet sein. Alternativ können das erste Lager und das zweite Lager als Festlager und als Loslager vorliegen. Vorzugsweise liegen die Eingangswellen und die Ausgangswellen jeweils wenigstens bereichsweise in dem Getriebegehäuse vor. Die Tellerradgetriebe, insbesondere die Tellerräder der Tellerradgetriebe, sind vorzugsweise vollständig in dem Getriebegehäuse aufgenommen.

Im Rahmen einer weiteren Ausführungsform der Erfindung kann vorgesehen sein, dass die erste Eingangswelle und die zweite Eingangswelle auf gegenüberliegenden Seiten der Tellerradgetriebe an oder in dem Getriebegehäuse gelagert sind. Die Seiten, auf welchen die Eingangswellen gelagert sind, liegen sich in axialer Richtung bezüglich der Tellerradgetriebe gegenüber. Anders ausgedrückt sind die erste Eingangswelle und die zweite Eingangswelle auf gegenüberliegenden Seiten des Schnittpunkts beziehungsweise der Schnittpunkte der Drehachsen der Ausgangswellen mit den Eingangswellen an beziehungsweise in dem Getriebegehäuse gelagert. Die erste Eingangswelle ist dabei auf einer ersten Seite gelagert und die zweite Eingangswelle auf einer der ersten Seite gegenüberliegenden Seite. Bevorzugt ist die erste Eingangswelle nur auf der ersten Seite gelagert, während die zweite Eingangswelle sowohl auf der ersten Seite als auch auf der zweiten Seite gelagert ist.

Eine weitere Ausführungsform der Erfindung sieht vor, dass wenigstens eine Lageranordnung zur Lagerung des ersten Tellerrads auf dem ersten Lagervorsprung und eine zweite Lageranordnung zur Lagerung des zweiten Tellerrads auf dem zweiten Lagervorsprung angeordnet und/oder mittels jeweils eines Befestigungsmittels, insbesondere eines Sprengrings, in wenigstens eine Richtung festgesetzt ist. Jede der Lageranordnungen kann grundsätzlich beliebig ausgestaltet sein. Insoweit lediglich auf eine der Lageranordnungen eingegangen wird, sind die entsprechenden Ausführungen vorzugsweise stets auf die jeweils andere übertragbar. Die Lageranordnung verfügt beispielsweise über wenigstens ein Radiallager, insbesondere über mehrere Radiallager. Sind mehrere Radiallager vorgesehen, so sind diese beispielsweise in O-Anordnung zueinander angeordnet. Alternativ können sie auch als Festlager und als Loslager ausgebildet sein. In letzterem Fall bildet eines der Radiallager das Festlager und das jeweils andere der Radiallager das Loslager.

Beispielsweise sind das Radiallager oder die Radiallager auf dem dem jeweiligen Tellerrad zugeordneten Lagervorsprung angeordnet. Das bedeutet, dass es mit seinem Innenring beziehungsweise sie mit ihren Innenringen auf dem jeweiligen Lagervorsprung aufsitzen. Ein Außenring des Radiallagers beziehungsweise Außenringe der Radiallager sind in dem Tellerrad und/oder der jeweiligen Ausgangswelle angeordnet. Entsprechend liegt der Außenring beziehungsweise liegen die Außenringe an einer Innenlagerfläche des Tellerrads beziehungsweise der Ausgangswelle an. Es kann vorgesehen sein, dass der Lageranordnung das Befestigungsmittel zugeordnet ist, mittels welchem sie beziehungsweise eines ihrer Radiallager in axialer Richtung bezüglich einer Drehachse des jeweiligen Tellerrads festgesetzt ist. Das Befestigungsmittel kann beispielsweise in Form des Sprengrings vorliegen, welcher bevorzugt in eine zumindest teilweise, insbesondere vollständig umlaufende Nut des jeweiligen Lagervorsprungs eingreift.

Schließlich kann im Rahmen einer weiteren bevorzugten Ausgestaltung der Erfindung vorgesehen sein, dass das Lagerelement einstückig und/oder materialeinheitlich ausgeführt ist. Das Lagerelement, also sein Zentraldom ist insoweit mit beiden Lagervorsprüngen aus einem Teil hergestellt. Bevorzugt bestehen dabei der Zentraldom und die beiden Lagervorsprünge aus demselben Material, sodass sie materialeinheitlich sind.

Es kann zudem in einer bevorzugten Ausgestaltung der Erfindung vorgesehen sein, dass das Lagerelement zumindest bereichsweise als Hohlkörper vorliegt. Zum einen ermöglicht dies eine besonders gewichtssparende Ausgestaltung des Achsgetriebes. Zum anderen wird durch die Ausgestaltung des Lagerelements als Hohlkörper beispielsweise eine Durchtrittsöffnung für eine der Eingangswellen, insbesondere die zweite Eingangswelle, geschaffen. Beispielsweise sind Tellerräder der beiden Tellerradgetriebe, welche mit den Eingangswellen starr verbunden sind, auf in axialer Richtung bezüglich der Drehachsen der Eingangswellen gegenüberliegenden Seiten des Lagerelements angeordnet. Das bedeutet, dass zumindest eine der Eingangswellen das Lagerelement in axialer Richtung vollständig durchgreift.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Seitenansicht eines Achsgetriebes für ein Kraftfahrzeug,
- Figur 2: eine schematische Schnittdarstellung durch ein Getriebegehäuse sowie ein in dem Getriebegehäuse angeordnetes Lagerelement,
- Figur 3: eine schematische Darstellung des Achsgetriebes in einer ersten Ausführungsform,
- Figur 4: eine schematische Darstellung einer zweiten Ausführungsform des Achsgetriebes,
- Figur 5: eine erste Variante einer dritten Ausführungsform des Achsgetriebes in einer schematischen Darstellung, sowie
- Figur 6: eine schematische Darstellung einer zweiten Variante der dritten Ausführungsform des Achsgetriebes.

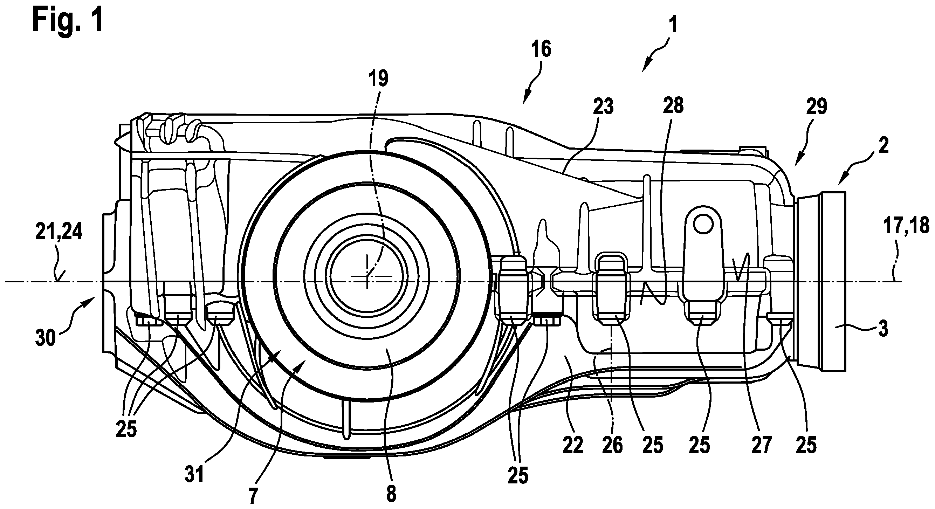

Die Figur 1 zeigt eine schematische Seitendarstellung eines Achsgetriebes 1 für ein Kraftfahrzeug. Dieses verfügt über eine erste Eingangswelle 2, von welcher hier ein Anschlussflansch 3 dargestellt ist. Koaxial zu der ersten Eingangswelle 2 ist eine hier nicht erkennbare zweite Eingangswelle 4 angeordnet. Die erste Eingangswelle 2 ist hierzu als Hohlwelle ausgestaltet und die zweite Eingangswelle 4 in der ersten Eingangswelle 2 angeordnet und/oder gelagert. Die zweite Eingangswelle 4 weist einen Anschlussflansch 5 auf, welcher vorzugsweise in dem Anschlussflansch 3 der ersten Eingangswelle 2 angeordnet ist. Die erste Eingangswelle 2 ist mittels eines ersten Tellerradgetriebes 6 mit einer ersten Ausgangswelle 7 permanent gekoppelt. Die erste Ausgangswelle 7 verfügt über einen Anschlussflansch 8, welcher hier erkennbar ist. Analog hierzu ist die zweite Eingangswelle 4 mittels eines zweiten Tellerradgetriebes 9 mit einer hier nicht erkennbaren zweiten Ausgangswelle 10 permanent gekoppelt, welche über einen Anschlussflansch 11 verfügt.

Das erste Tellerradgetriebe 6 besteht aus einem starr und permanent mit der ersten Eingangswelle 2 gekoppelten Tellerrad 12 und einem mit dem Tellerrad 12 kämmenden, permanent und starr mit der ersten Ausgangswelle 7 gekoppelten Tellerrad 13. Analog hierzu weist das zweite Tellerradgetriebe 9 ein starr und permanent mit der zweiten Eingangswelle 4 gekoppeltes Tellerrad 14 sowie ein mit dem Tellerrad 14 kämmendes sowie starr und permanent mit der zweiten Ausgangswelle 10 gekoppeltes Tellerrad 15 auf. Die Tellerradgetriebe 6 und 9 und entsprechend die Tellerräder 12, 13, 14 und 15 sind in einem Getriebegehäuse 16 des Achsgetriebes 1 angeordnet, insbesondere vollständig. In anderen Worten schließt das Getriebegehäuse 16 die Tellerradgetriebe 6 und 9 vorzugsweise vollständig ein.

Es wurde bereits darauf hingewiesen, dass die erste Eingangswelle 2 und die zweite Eingangswelle 4 koaxial zueinander angeordnet sind, wobei die zweite Eingangswelle 4 in der ersten Eingangswelle 2 vorliegt. Die Eingangswelle 2 und 4 weisen also miteinander zusammenfallende Drehachsen 17 und 18 auf. Die erste Ausgangswelle 7 und die zweite Ausgangswelle 10 erstrecken sich nun ausgehend von dem jeweiligen Tellerradgetriebe 6 beziehungsweise 9 in gegenüberliegende Richtungen. In dem hier dargestellten Ausführungsbeispiel erstreckt sich somit die erste Ausgangswelle 7 aus der Zeichenebene heraus, während die zweite Ausgangswelle 10 in die Zeichenebene hinein verläuft. Eine Drehachse 19 der ersten Ausgangswelle 7 beziehungsweise jedes Anschlussflansches 8 ist in vertikaler Richtung leicht schräg angeordnet und schneidet die Drehachsen 17 und 18. Entsprechendes gilt für eine hier nicht erkennbare Drehachse 20 der zweiten Ausgangswelle 10 beziehungsweise ihres Anschlussflansches 11.

Die Eingangswellen 2 und 4 beziehungsweise ihre Drehachsen 17 und 18 liegen in einer Achsebene 21, welche grundsätzlich horizontal angeordnet ist.

Anders ausgedrückt steht auf der Achsebene 21 eine gedachte Ebene senkrecht, welche im Schnitt, insbesondere im Querschnitt bezüglich der Drehachsen 17 und 18 gesehen, als Symmetrieebene für die Drehachsen 19 und 20 der Ausgangswellen 7 und 10 vorliegt. Die Drehachsen 19 und 20 sind insoweit symmetrisch zu dieser gedachten Ebene angeordnet und ausgerichtet, welche aufgrund der horizontalen Anordnung der Achsebene 21 auch als Vertikalebene bezeichnet werden kann.

Weil die gedachte Ebene als Symmetrieebene für die Drehachsen 19 und 20 dient, schneiden die Drehachsen 19 und 20 sowohl die Symmetrieebene als auch die Achsebene jeweils unter demselben Winkel. Anders ausgedrückt liegt also die Drehachse 19 bezüglich der Achsebene 21 beziehungsweise der Symmetrieebene unter einem ersten Winkel und die Drehachse 20 bezüglich der Achsebene 21 beziehungsweise der Symmetrieebene unter einem zweiten Winkel vor, wobei die beiden Winkel gleich sind. Ganz allgemein schneiden insoweit die Drehachsen 19 und 20 die Achsebene 21. Es kann auch vorgesehen sein, dass die Drehachsen 19 und 20 vollständig in der Achsebene 21 liegen.

Um eine platzsparende Ausgestaltung des Achsgetriebes 1 zu ermöglichen, ist das Getriebegehäuse 16 mehrteilig ausgestaltet und weist hierbei eine erste Gehäuseschale 22 und eine zweite Gehäuseschale 23 auf, die separat voneinander ausgebildet sind und in einer Kontaktebene 24 aneinander anliegen, die in der Achsebene 21 oder parallel zu dieser liegt. Die erste Gehäuseschale 22 und die zweite Gehäuseschale 23 sind mittels wenigstens einer Schraube 25, in dem hier dargestellten Ausführungsbeispiel mittels einer Vielzahl von Schrauben 25, miteinander verschraubt. Wenigstens eine der Schrauben 25, bevorzugt jedoch alle der Schrauben 25, weist nun eine Längsmittelachse 26 auf, die bezüglich der Kontaktebene 24 angewinkelt ist, diese also unter einem bestimmten Winkel schneidet.

Insoweit ist es nicht vorgesehen, dass die Schraube 25 beziehungsweise ihre Längsmittelachse 26 parallel zu der Kontaktebene 24 angeordnet sind oder die Längsmittelachse 26 in der Kontaktebene 24 liegt. Vielmehr steht besonders bevorzugt die Längsmittelachse 26 senkrecht auf der Kontaktebene 24. Zudem ist es vorzugsweise vorgesehen, dass wenigstens eine der Schrauben 25 von der Kontaktebene 24 durchgriffen ist, also von der Kontaktebene 24 geschnitten wird.

Das bedeutet für die Anordnung der Schraube 25, dass diese seitlich an dem Getriebegehäuse 16 vorliegt und nicht etwa an einem separaten Befestigungsflansch, welcher an einer Oberseite oder einer Unterseite des Getriebegehäuses 16 zur Befestigungsschalen 22 und 23 aneinander vorgesehen wäre. Ein derartiger Befestigungsflansch ist bei der hier beschriebenen vorteilhaften Ausgestaltung des Achsgetriebes 1 schlichtweg nicht vorgesehen. Mit einer derartigen Ausgestaltung kann der Bauraumbedarf in vertikaler Richtung, also in der Symmetrieebene im Vergleich zu anderen Achsgetrieben 1 deutlich reduziert werden.

An der ersten Gehäuseschale 22 liegt eine in der Kontaktebene 24 liegende plane erste Anlagefläche 27 und an der zweiten Gehäuseschale 23 eine in der Kontaktebene 24 liegende plane zweite Anlagefläche 28 vor. Die beiden Anlagenflächen 27 und 28 liegen nach der Montage der Gehäuseschalen 22 und 23 flächig, insbesondere vollflächig, aneinander an. Unter der vollflächigen Anordnung ist zu verstehen, dass die gesamte erste Anlagefläche 27 an der gesamten zweiten Anlagefläche 28 anliegt. Jede der Anlageflächen 27 und 28 deckt insoweit die jeweils andere Anlagefläche 28 beziehungsweise 27 vollständig ab.

Die Schraube 25 durchgreift nun sowohl die erste Anlagefläche 27 als auch die zweite Anlagefläche 28. Sie greift insoweit sowohl in die erste Gehäuseschale 22 als auch in die zweite Gehäuseschale 23 zu deren Befestigung aneinander ein. In dem hier dargestellten Ausführungsbeispiel ist es vorgesehen, dass sich die erste Anlagefläche 27 in Richtung der Drehachsen 17 und 18 von einem Ende 29 des Getriebegehäuses 16 bis zu seinem anderen Ende 30 erstreckt. Zusätzlich oder alternativ gilt dies für die zweite Anlagefläche 28. Besonders bevorzugt erstrecken sich also sowohl die erste Anlagefläche 27 als auch die zweite Anlagefläche 28 einerseits bis hin zu dem Ende 29 und andererseits bis hin zu dem Ende 30.

Zwischen den Enden 29 und 30 können die Anlageflächen 27 und 28 jedoch unterbrochen sein. In dem hier dargestellten Ausführungsbeispiel ist dies für beide Anlageflächen aufgrund einer ersten Austrittsausnehmung 31 für die erste Ausgangswelle 7 beziehungsweise ihren Anschlussflansch 8 sowie eine zweite Austrittsausnehmung 32 für die zweite Ausgangswelle 10 beziehungsweise ihren Anschlussflansch 11 der Fall. Die erste Ausgangswelle 7 durchgreift insoweit die erste Austrittsausnehmung 31 beziehungsweise ist in dieser angeordnet, während die zweite Ausgangswelle 10 die zweite Austrittsausnehmung 32 durchgreift beziehungsweise in dieser angeordnet ist. Besonders bevorzugt ist es vorgesehen, dass die Austrittsausnehmungen 31 und 32 jeweils zu gleichen Teilen in der Gehäuseschale 22 und der zweiten Gehäuseschale 23 ausgebildet sind. Zumindest liegt jedoch jede der Austrittsausnehmungen 31 und 32 zumindest teilweise in der ersten Gehäuseschale 22 und zumindest teilweise in der zweiten Gehäuseschale 23 vor. Die Anlageflächen 27 und 28 weisen insoweit jeweils zwei Teilflächen auf, welche in axialer Richtung bezüglich der Drehachsen 17 und 18 gesehen auf gegenüberliegenden Seiten der Austrittsausnehmungen 31 und 32 vorliegen.

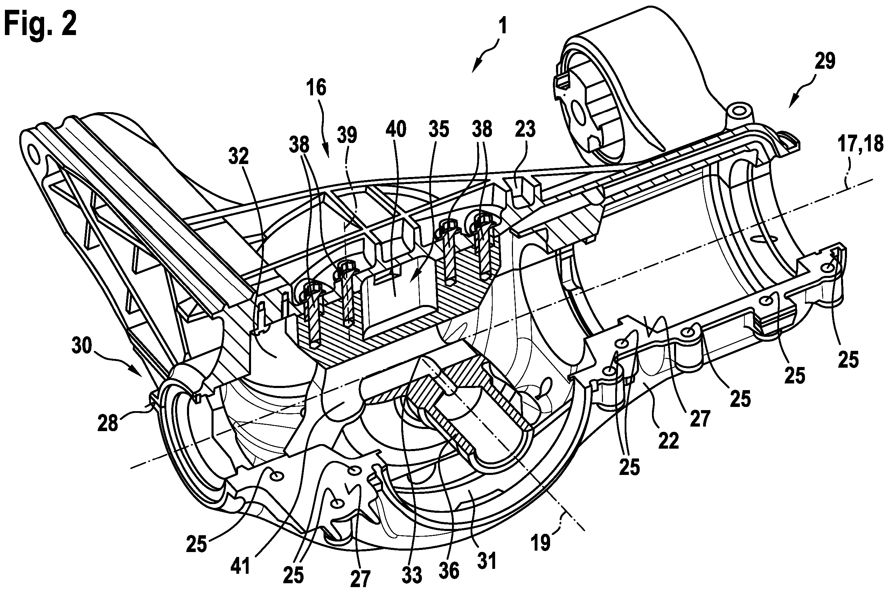

Die Figur 2 zeigt eine schematische Teilschnittdarstellung eines Teils des Achsgetriebes 1. Dabei sind die Eingangswellen 2 und 4 sowie die Ausgangswellen 7 und 10 nicht dargestellt. Dies gilt ebenso für die Tellerradgetriebe 6 und 9. Grundsätzlich wird jedoch dennoch auf die vorstehenden Ausführungen Bezug genommen. Hier ist nun deutlich erkennbar, dass die Drehachse 19 die Drehachsen 17 und 18 an einem Schnittpunkt 33 schneidet. Dies gilt analog auch für die Drehachse 20 an einem hier nicht dargestellten Schnittpunkt 34, wobei dieser mit dem Schnittpunkt 33 zusammenfallen kann.

Weiterhin ist nun erkennbar, dass in dem Getriebegehäuse 16 in einer bevorzugten Ausgestaltung des Achsgetriebes 1 ein Lagerelement 35 angeordnet ist. Dieses verfügt über einen ersten Lagervorsprung 36 sowie über einen diesem gegenüberliegenden, hier nicht erkennbaren zweiten Lagervorsprung 37. Auf dem ersten Lagervorsprung 36 ist das mit der ersten Ausgangswelle 7 starr verbundene erste Tellerrad 13 und auf dem zweiten Lagervorsprung 37 das mit der zweiten Ausgangswelle 10 starr verbundene Tellerrad 15 des zweiten Tellerradgetriebes 9 drehbar gelagert. Der erste Lagervorsprung 36 ragt dabei in Richtung der ersten Austrittsausnehmung 31, insbesondere ragt er in diese hinein oder durchgreift sie sogar in Richtung der Drehachse 19. Umgekehrt ragt der zweite Lagervorsprung 37 in Richtung der zweiten Austrittsausnehmung 32. Auch er kann in diese hineinragen oder sie sogar in Richtung der Drehachse 20 durchgreifen.

Das Lagerelement 35 ist nun einerseits an der ersten Gehäuseschale 22 und andererseits an der zweiten Gehäuseschale 23 befestigt. Die Befestigung erfolgt jeweils mittels wenigstens einer Schraube 38, vorzugsweise jeweils mittels mehrerer Schrauben 38. Dies ist hier lediglich für die Befestigung des Lagerelements 35 an der zweiten Gehäuseschale 23 erkennbar. Bevorzugt sind jedoch die entsprechenden Ausführungen auf die Befestigung des Lagerelements 35 an der ersten Gehäuseschale 22 übertragbar. Es ist erkennbar, dass die Schraube 38 beziehungsweise die Schrauben 38 jeweils eine Längsmittelachse 39 aufweisen. Die Schraube 38 beziehungsweise ihre Längsmittelachse 39 ist nun bezüglich der Kontaktebene 24 (hier nicht dargestellt) angewinkelt. Insbesondere steht sie senkrecht auf der Kontaktebene 24. Das bedeutet also, dass die Längsmittelachse 39 der Schraube 38 bevorzugt parallel zu der Längsmittelachse 26 der Schraube 25 ausgerichtet ist.

Zur Halterung des Lagerelements 35 an dem Getriebegehäuse 16 greift die Schraube 38 in einen Zentraldom 40 des Lagerelements 35 ein. Von dem Zentraldom 40 gehen auf gegenüberliegenden Seiten der Symmetrieebene die Lagervorsprünge 36 und 37 ab. Weiterhin kann in dem Zentraldom 40, insbesondere zwischen den Lagervorsprüngen 36 und 37, eine Durchtrittsausnehmung 41 zur Aufnahme der zweiten Eingangswelle 4 ausgebildet sein. Vorzugsweise durchgreift insoweit die zweite Eingangswelle 4 das Lagerelement 35, insbesondere dessen Durchtrittsausnehmung 41 in axialer Richtung bezüglich der Drehachsen 17 und 18 vollständig.

Die Tellerradgetriebe 6 und 9 sind dabei bevorzugt derart ausgestaltet, dass die mit den Eingangswellen 2 und 4 verbundenen Tellerräder 12 und 14 auf gegenüberliegenden Seiten des Lagerelements 35 vorliegen, also auf gegenüberliegenden Seiten einer auf den Drehachsen 17 und 18 senkrecht stehenden Ebene. Insbesondere liegt das Tellerrad 12 vollständig auf einer Seite dieser Ebene und das Tellerrad 14 vollständig auf der gegenüberliegenden Seite der Ebene vor. Das Lagerelement 35 ist bevorzugt einstückig und/oder materialeinheitlich ausgestaltet. Beispielsweise besteht es aus demselben Material wie die Gehäuseschalen 22 und 23. Die Verwendung des Lagerelements 35 erlaubt eine besonders kompakte Ausgestaltung des Achsgetriebes 1, insbesondere in vertikaler Richtung.

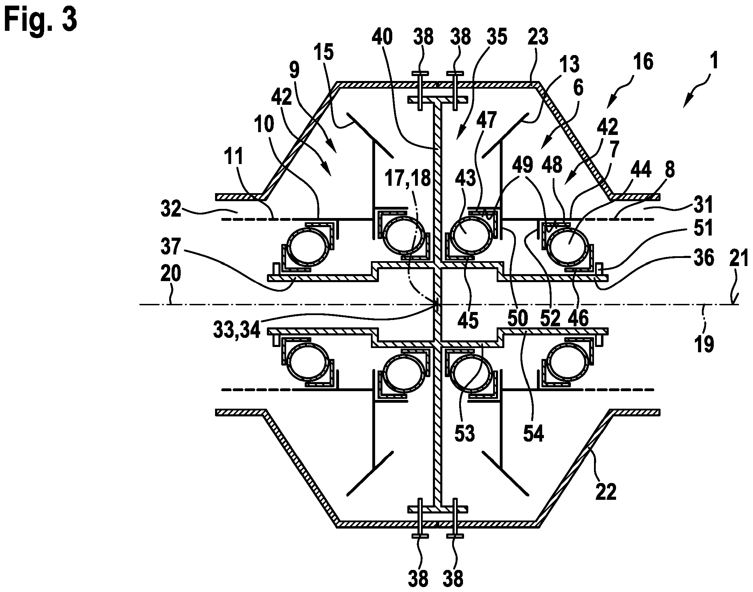

Die Figur 3 zeigt eine schematische Schnittdarstellung des Achsgetriebes 1, nämlich einen Querschnitt bezüglich der Drehachsen 17 und 19, wobei die Schnittebene senkrecht auf den Drehachsen 17 und 18 steht und die Drehachsen 19 und 20 vorzugsweise in sich aufnimmt. Die Blickrichtung in dem Querschnitt ist in Richtung des Endes 29 gerichtet. Die Eingangswellen 2 und 4 sind dabei nicht dargestellt. Es ist erkennbar, dass jedes der Tellerräder 13 und 15 beziehungsweise jede der Ausgangswellen 7 und 10 jeweils mittels einer Lageranordnung 42 in dem Getriebegehäuse 16 gelagert ist. Die Lageranordnung 42 für die Tellerräder 13 und 15 beziehungsweise die entsprechenden Ausgangswellen 7 und 10 sind analog ausgestaltet, insbesondere jedoch spiegelbildlich. Nachfolgend wird näher auf die Lageranordnung 42 für das Tellerrad 13 beziehungsweise die erste Ausgangswelle 7 eingegangen. Die Ausführungen sind jedoch stets auf die Lageranordnung 42 für das Tellerrad 15 beziehungsweise die zweite Ausgangswelle 10 übertragbar.

Die Lageranordnung 42 verfügt über ein erstes Radiallager 43 sowie ein zweites Radiallager 44. Diese sind in O-Anordnung zueinander angeordnet. Alternativ können sie auch als Festlager und Loslager ausgebildet sein. In letzterem Fall bildet eines der Radiallager 43 und 44 das Festlager und das jeweils andere der Radiallager 43 und 44 das Loslager. Nachfolgend wird jedoch auf die hier dargestellte O-Anordnung näher eingegangen. Die Ausführungen sind jedoch stets auf die Ausgestaltung der Radiallager 43 und 44 als Festlager und Loslager übertragbar. Die Radiallager 43 und 44 sind vorzugsweise als Wälzlager, insbesondere als Kugellager, ausgestaltet.

Die Radiallager 43 und 44 sind beide auf dem ersten Lagervorsprung 36 angeordnet. Das bedeutet, dass sie mit ihren Innenringen 45 und 46 auf dem ersten Lagervorsprung 36 aufsitzen. Außenringe 47 und 48 der Radiallager 43 und 44 dagegen sind in dem Tellerrad 13 und/oder der ersten Ausgangswelle 7 angeordnet. Entsprechend liegen die Außenringe 47 und 48 an einer Innenlagerfläche 49 des Tellerrads 13 beziehungsweise der ersten Ausgangswelle 7 an. Es ist vorgesehen, dass sich das erste Radiallager 43 in axialer Richtung bezüglicher der Drehachse 19 an dem Zentraldom 40 des Lagerelements 35 abstützt. In anderen Worten ist das erste Radiallager 43 in axialer Richtung bezüglich der Drehachse 19 zwischen dem Zentraldom 40 und dem Tellerrad 13 beziehungsweise einem Axiallagervorsprung 50 des Tellerrads 13 angeordnet. Insbesondere liegt das Radiallager 43 permanent an dem Zentraldom 40 und andererseits permanent an dem Axiallagervorsprung 50 an.

Das zweite Radiallager 44 ist vorzugsweise mittels eines Befestigungsmittels 51 in axialer Richtung nach außen, also in die von dem Zentraldom 40 abgewandte Richtung, festgesetzt. Als Befestigungsmittel 51 wird beispielsweise ein Sprengring oder dergleichen verwendet. Insbesondere ist das Befestigungsmittel 51 wieder lösbar. Das Radiallager 44 ist vorzugsweise zwischen dem Befestigungsmittel 51 und dem Tellerrad 13 beziehungsweise einem Axiallagervorsprung 52 des Tellerrads 13 beziehungsweise der ersten Ausgangswelle 7 angeordnet. Bevorzugt liegt das zweite Radiallager 44 einerseits permanent an dem Befestigungsmittel 51 und andererseits permanent an dem Axiallagervorsprung 52 an.

Die Axiallagervorsprünge 50 und 52 können voneinander verschieden und insbesondere in axialer Richtung voneinander beabstandet angeordnet sein. Die Axiallagervorsprünge 50 und 52 können jedoch auch als gemeinsamer Axiallagervorsprung ausgestaltet sein, wobei das erste Radiallager 43 auf einer Seite und das zweite Radiallager 44 auf in axialer Richtung abgewandter Seite dieses gemeinsamen Axiallagervorsprungs vorliegt. Es wird deutlich, dass die Lageranordnung 42, also sowohl das erste Radiallager 43 als auch das zweite Radiallager 44, lediglich über das Lagerelement 35 an dem Getriebegehäuse 16 befestigt ist. Die Radiallager 43 und 44 greifen also ausschließlich über das Lagerelement 35 an dem Getriebegehäuse 16 an.

Weiterhin ist es erkennbar, dass der erste Lagervorsprung 36 einen ersten Bereich 53 sowie einen zweiten Bereich 54 aufweist, welche sich hinsichtlich ihres Durchmessers unterscheiden. So weist der erste Lagervorsprung 36 in dem ersten Bereich 53 einen ersten Durchmesser und in dem zweiten Bereich 54 einen zweiten Durchmesser auf, wobei der erste Durchmesser größer ist als der zweite Durchmesser. Der erste Bereich 53 grenzt vorzugsweise unmittelbar an den Zentraldom 40 an, jedenfalls ist er auf der dem Zentraldom 40 zugewandten Seite des zweiten Bereichs 54 angeordnet. Die beiden Bereiche 53 und 54 grenzen bevorzugt unmittelbar in axialer Richtung bezüglich der Drehachse 19 aneinander an.

Das erste Radiallager 43 sitzt nun in dem ersten Bereich 53 und das zweite Radiallager 44 in dem zweiten Bereich 54 auf dem ersten Lagervorsprung 36 auf. Insoweit weist der Innenring 45 einen größeren Durchmesser auf als der Innenring 46. Vorzugsweise sind die Radiallager 43 und 44 in radialer Richtung gleich groß, sodass analog zu den Innenringen 45 und 46 der Außenring 47 einen größeren Durchmesser aufweist als der Außenring 48. Selbstverständlich können die Radiallager 43 und 44 jedoch derart gewählt werden, dass die Durchmesserdifferenz zwischen den Innenringen 45 und 46 von der Durchmesserdifferenz der Außenringe 47 und 48 verschieden ist. Beispielsweise sind hierbei die Innenringe 45 und 46 mit unterschiedlichen Durchmessern ausgeführt, während die Außenringe 47 und 48 den gleichen Durchmesser aufweisen.

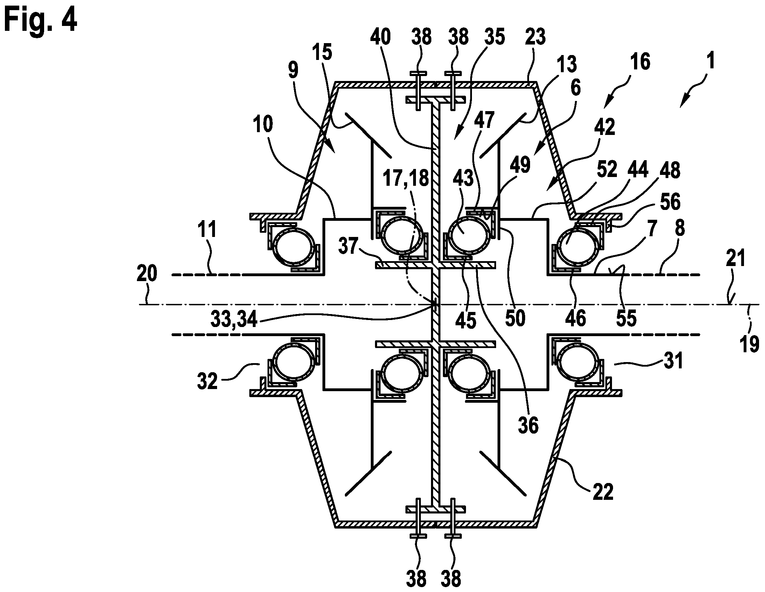

Die Figur 4 zeigt eine zweite Ausführungsform des Achsgetriebes 1, wiederum in einer Schnittdarstellung. Grundsätzlich wird auf die vorstehenden Ausführungen verwiesen und nachfolgend lediglich auf die Unterschiede eingegangen. Diese liegen darin, dass die Radiallager 43 und 44 der Lageranordnung 42 nunmehr in Tandem-Anordnung zueinander angeordnet sind. Alternativ wäre auch eine Anordnung der Radiallager 43 und 44 in X-Anordnung oder wiederum - wie vorstehend bereits erläutert - eine Ausgestaltung der Radiallager 43 und 44 als Festlager und Loslager möglich. Nachfolgend wird auf die Tandem-Anordnung genauer eingegangen. Die Ausführungen sind jedoch auf die X-Anordnung und die Ausgestaltung als Festlager und Loslager übertragbar.

Das erste Radiallager 43 ist analog zu der ersten Ausführungsform des Achsgetriebes 1 angeordnet. Entsprechend sitzt es mit seinem Innenring 45 auf dem ersten Lagervorsprung 36. In axialer Richtung stützt es sich vorzugsweise einerseits an dem Zentraldom 40 und andererseits an dem Axiallagervorsprung 50 ab. Unterschiede ergeben sich jedoch hinsichtlich des zweiten Radiallagers 44. Dieses sitzt mit seinem Innenring 45 auf einer Außenlagerfläche 55 des Tellerrads 13 beziehungsweise der ersten Ausgangswelle 7. Während also das erste Radiallager 43 in das Tellerrad 13 beziehungsweise die Ausgangswelle 7 eingreift, umgreift das zweite Radiallager 44 das Tellerrad 13 beziehungsweise die Ausgangswelle 7. Folglich kann der erste Lagervorsprung 36 kürzer ausfallen und einen einheitlichen Durchmesser aufweisen. Auch das Befestigungsmittel 51 kann entfallen.

Das zweite Radiallager 44 greift einerseits an dem Tellerrad 13 beziehungsweise der Ausgangswelle 7 und andererseits direkt an dem Getriebegehäuse 16, insbesondere an beiden Gehäuseschalen 22 und 23, an. Der Axiallagervorsprung 52 wird nunmehr von einer Anlageschulter des Tellerrads 13 beziehungsweise der Ausgangswelle 7 gebildet. Diese kann wiederum mittels einer Durchmesseränderung dargestellt sein. Um das zweite Radiallager 44 in axialer Richtung bezüglich des Getriebegehäuses 16 zumindest nach außen festzusetzen, weist das Getriebegehäuse 16 ebenfalls einen Axiallagervorsprung 56 auf. Dieser ist vorzugsweise sowohl an der ersten Gehäuseschale 22 als auch an der zweiten Gehäuseschale 23 ausgebildet. Das zweite Radiallager 44 liegt nun in axialer Richtung bezüglich der Drehachse 19 gesehen zwischen dem Axiallagervorsprung 52 und dem Axiallagervorsprung 56 vor. Besonders bevorzugt liegt er permanent einerseits an dem Axiallagervorsprung 52 und permanent andererseits an dem Axiallagervorsprung 56 an.

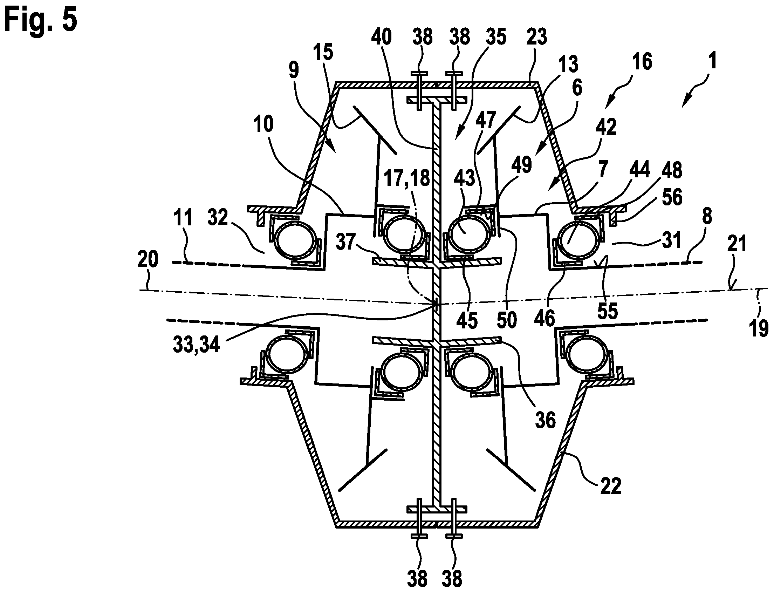

Die Figur 5 zeigt eine erste Variante einer dritten Ausführungsform des Achsgetriebes 1. Dargestellt ist dabei erneut eine schematische Querschnittsdarstellung gemäß den vorstehenden Ausführungen. Die Lageranordnung 42 ist analog zu der vorstehend beschriebenen zweiten Ausführungsform ausgeführt. Auch eine Lageranordnung 42 gemäß der ersten Ausführungsform kann jedoch verwendet werden. Auf die vorstehenden Ausführungen wird insoweit Bezug genommen. Nachfolgend wird lediglich auf die Unterschiede zu den ersten beiden Ausführungsformen eingegangen. Diese liegen darin, dass die Tellerräder 13 und 15 und mithin die Drehachsen 19 und 20 nicht parallel zueinander verlaufen, sondern vielmehr gegeneinander angewinkelt sind.

Das bedeutet, dass die Drehachsen 19 und 20 weiterhin die Drehachsen 17 und 18 in den Schnittpunkten 33 und 34 schneiden, wobei die Schnittpunkte 33 und 34 zusammenfallen können. Ganz allgemein ausgedrückt schneiden die Drehachsen 19 und 20 jeweils beide Drehachsen 17 und 18. Die Drehachsen 19 und 20 können zusätzlich einander schneiden oder alternativ windschief zueinander angeordnet sein, insbesondere parallel beabstandet zueinander. In einer hier dargestellten ersten Variante schneiden sich die Drehachsen 19 und 20. Dabei sind die Drehachsen 19 und 20 jeweils um denselben Winkel gegenüber der Achsebene 21 beziehungsweise der Kontaktebene 24 angewinkelt, sodass die senkrecht auf der Kontaktebene 24 stehende und die Drehachsen 17 und 18 aufnehmende Ebene als Symmetrieebene für die Drehachsen 19 und 20 dient.

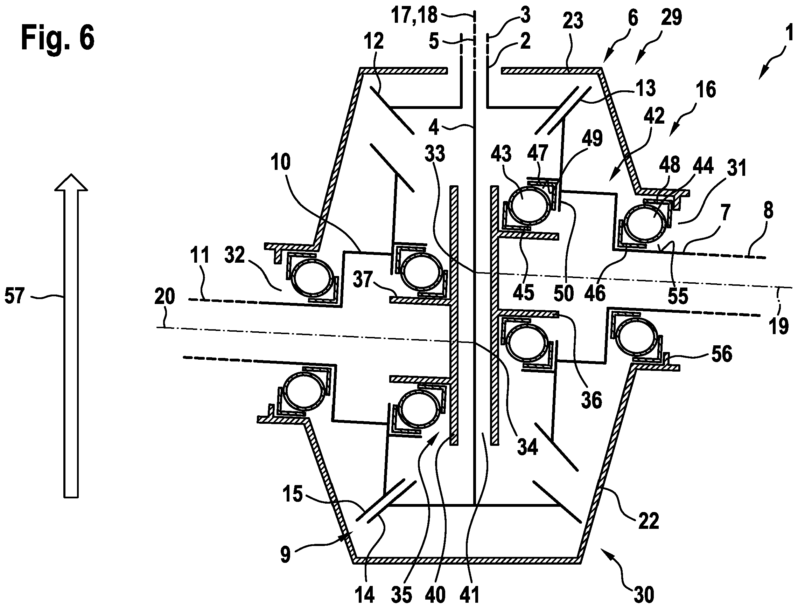

In der Figur 6 ist eine zweite Variante der dritten Ausführungsform dargestellt. Gezeigt ist hierbei eine Schnittdarstellung durch das Achsgetriebe, nämlich eine Längsschnittdarstellung bezüglich der Drehachse 17 und 18. Die Schnittebene ist dabei derart gewählt, dass eine Blickrichtung hin zu der ersten Gehäuseschale 22 vorliegt. Auf die vorstehenden Ausführungen wird ausdrücklich Bezug genommen. In Ergänzung zu diesen ist hier nun deutlich zu erkennen, dass die Tellerräder 12 und 14 der Tellerradgetriebe 6 und 9 auf gegenüberliegenden Seiten des Lagerelements 35 angeordnet sind. Hierzu durchgreift - wie bereits vorstehend erläutert - die zweite Eingangswelle 4 das Lagerelement 35, insbesondere durchgreift sie dabei die Durchtrittsausnehmung 41. Eine Fahrtrichtung eines Kraftfahrzeugs, welchem das Achsgetriebe 1 zugeordnet ist, ist durch den Pfeil 57 angedeutet.

Zusätzlich oder alternativ zu der vorstehend beschriebenen ersten Variante, bei welcher die Drehachsen 19 und 20 bezüglich der Achsebene angewinkelt sind, kann es nun vorgesehen sein, dass die Drehachsen 19 und 20 auch in axialer Richtung bezüglich der Drehachsen 17 und 18 gegeneinander versetzt sind. Beispielsweise sind hierzu die Tellerradgetriebe 6 und 9 derart ausgestaltet, dass ein Kegelwinkel vorliegt, welcher von 90° verschieden ist. Im Rahmen der vorstehend beschriebenen Ausführungsformen und der ersten Variante ist dagegen bevorzugt der Kegelwinkel gleich 90°. Aus der Verlagerung der Drehachsen 19 und 20 in axialer Richtung gegeneinander ergeben sich zwei voneinander beabstandete Schnittpunkte 33 und 34.

Das beschriebene Achsgetriebe 1 ermöglicht eine äußerst kompakte Ausgestaltung. Dies gilt insbesondere dann, wenn auf der dem Achsgetriebe 1 abgewandten Seite der Eingangswellen 2 und 4 eine weitere Getriebeeinrichtung, insbesondere ein Differentialgetriebe, vorzugsweise ein Achsdifferentialgetriebe, angeordnet ist. Das Achsgetriebe 1 dient somit lediglich zur Herstellung der permanenten Wirkverbindungen zwischen der ersten Eingangswelle 2 und der ersten Ausgangswelle 7 einerseits sowie der zweiten Eingangswelle 4 und der zweiten Ausgangswelle 10 andererseits.

## Patentansprüche

1. Achsgetriebe (1) für ein Kraftfahrzeug, mit einer ersten Eingangswelle (2), einer zweiten Eingangswelle (4), einer ersten Ausgangswelle (7) und einer zweiten Ausgangswelle (10), wobei die erste Eingangswelle (2) mit der ersten Ausgangswelle (7) mittels eines ersten Tellerradgetriebes (6) und die zweite Eingangswelle (4) mit der zweiten Ausgangswelle (10) mittels eines zweiten Tellerradgetriebes (9) permanent gekoppelt ist, wobei die erste Eingangswelle (2) und die zweite Eingangswelle (4) koaxial zueinander angeordnet sind und die erste Ausgangswelle (7) und die zweite Ausgangswelle (10) sich ausgehend von dem jeweiligen Tellerradgetriebe (6,9) in gegenüberliegende Richtungen erstrecken, und wobei Drehachsen (17,18) der beiden Eingangswellen (2,4) und Drehachsen (19,20) der beiden Ausgangswellen (7,10) in einer Achsebene (21) liegen und eine auf der Achsebene (21) senkrecht stehende und die Drehachsen (17,18) der beiden Eingangswellen (2,4) in sich aufnehmende Ebene mit den Drehachsen (19,20) der Ausgangswellen (7,10) jeweils einen Winkel von mindestens 75° und höchstens 90° einschließt, wobei in einem Getriebegehäuse (16) des Achsgetriebes (1) ein an dem Getriebegehäuse (16) befestigtes Lagerelement (35) angeordnet ist, das einen ersten Lagervorsprung (36) und einen zweiten Lagervorsprung (37) aufweist, wobei auf dem ersten Lagervorsprung (36) ein mit der ersten Ausgangswelle (7) starr verbundenes erstes Tellerrad (13) des ersten Tellerradgetriebes (6) und auf dem zweiten Lagervorsprung (37) ein mit der zweiten Ausgangswelle (10) starr verbundenes zweites Tellerrad (15) des zweiten Tellerradgetriebes (9) gelagert ist, **dadurch gekennzeichnet, dass** das Getriebegehäuse (16) mehrteilig ausgestaltet ist und eine erste Gehäuseschale (22) und eine zweite Gehäuseschale (23) aufweist, wobei das separat von dem Getriebegehäuse (16) ausgebildete Lagerelement (35) auf gegenüberliegenden Seiten einer Kontaktebene (24) einerseits an der ersten Gehäuseschale (22) und andererseits an der zweiten Gehäuseschale (23) befestigt ist.

2. Achsgetriebe (1) nach Anspruch 1, **dadurch gekennzeichnet, dass** der erste Lagervorsprung (36) in Richtung einer ersten Austrittsausnehmung (31) des Getriebegehäuses (16) und der zweite Lagervorsprung (37) in Richtung einer zweiten Austrittsausnehmung (32) des Getriebegehäuses (16) ragt oder in diese hineinragt.

3. Achsgetriebe (1) nach einem der vorhergehenden Ansprüche, **dadurch gekennzeichnet, dass** die erste Gehäuseschale (22) und die zweite Gehäuseschale (23) separat voneinander ausgebildet sind und in der Kontaktebene (24) aneinander anliegen, die in der Achsebene oder parallel zu dieser liegt.

4. Achsgetriebe (1) nach einem der vorhergehenden Ansprüche, **dadurch gekennzeichnet, dass** das Lagerelement (35) einerseits an der ersten Gehäuseschale (22) und andererseits an der zweiten Gehäuseschale (23) jeweils mittels wenigstens einer Schraube (38) befestigt ist, deren Längsmittelachse bezüglich der Kontaktebene (24) angewinkelt ist und/oder senkrecht auf ihr steht.

5. Achsgetriebe (1) nach einem der vorhergehenden Ansprüche, **dadurch gekennzeichnet, dass** das Lagerelement (35) beidseitig einer gedachten Ebene, die senkrecht auf der Kontaktebene (24) angeordnet ist und einen Schnittpunkt (33,34) der Drehachsen (19,20) der Ausgangswellen (7,10) mit den Drehachsen (17,18) der Eingangswellen (2,4) in sich aufnimmt, jeweils an der ersten Gehäuseschale (22) oder der zweiten Gehäuseschale (23) befestigt ist.

6. Achsgetriebe (1) nach einem der vorhergehenden Ansprüche, **dadurch gekennzeichnet, dass** die erste Eingangswelle (2) und die zweite Eingangswelle (4) sowie die erste Ausgangswelle (7) und die zweite Ausgangswelle (10) jeweils an oder in dem Getriebegehäuse (16) gelagert sind.

7. Achsgetriebe (1) nach einem der vorhergehenden Ansprüche, **dadurch gekennzeichnet, dass** die erste Eingangswelle (2) und die zweite Eingangswelle (4) auf gegenüberliegenden Seiten der Tellerradgetriebe (6,9) an und/oder in dem Getriebegehäuse (16) gelagert sind.

8. Achsgetriebe (1) nach einem der vorhergehenden Ansprüche, **dadurch gekennzeichnet, dass** wenigstens eine Lageranordnung (42) zur Lagerung des ersten Tellerrads (13) auf dem ersten Lagervorsprung (36) und eine zweite Lageranordnung (42) zur Lagerung des zweiten Tellerrads (15) auf dem zweiten Lagervorsprung (37) angeordnet und/oder mittels jeweils eines Befestigungsmittels (51), insbesondere eines Sprengrings, in wenigstens eine Richtung festgesetzt ist.

9. Achsgetriebe (1) nach einem der vorhergehenden Ansprüche, **dadurch gekennzeichnet, dass** das Lagerelement (35) einstückig und/oder materialeinheitlich ausgeführt ist.

## Claims

1. Final drive (1) for a motor vehicle, comprising a first input shaft (2), a second input shaft (4), a first output shaft (7) and a second output shaft (10), wherein the first input shaft (2) is permanently coupled to the first output shaft (7) by means of a first ring gear transmission (6) and the second input shaft (4) is permanently coupled to the second output shaft (10) by means of a second ring gear transmission (9), wherein the first input shaft (2) and the second input shaft (4) are arranged coaxially to one another and the first output shaft (7) and the second output shaft (10) extend from the respective ring gear transmission (6, 9) in opposite directions, and wherein axes of rotation (17, 18) of the two input shafts (2, 4) and axes of rotation (19, 20) of the two output shafts (7, 10) lie in an axial plane (21) and a plane perpendicular to the axial plane (21) and containing the axes of rotation (17, 18) of the two input shafts (2, 4) form an angle of at least 75° and at most 90° with the axes of rotation (19, 20) of the output shafts (7, 10), wherein in a transmission housing (16) of the final drive (1) a bearing element (35) secured to the transmission housing (16) is arranged, which has a first bearing projection (36) and a second bearing projection (37), wherein on the first bearing projection (36) a first ring gear (13) of the first ring gear transmission (6) connected rigidly to the first output shaft (7) is mounted and on the second bearing projection (37) a second ring gear (15) of the second ring gear transmission (9) rigidly connected to the second output shaft (10) is mounted, **characterised in that** the transmission housing (16) is configured as multiple parts and has a first housing shell (22) and a second housing shell (23), wherein the bearing element (35) designed separately from the transmission housing (16) is secured on opposite sides of a contact plane (24) on the one hand on the first housing shell (22) and on the other hand on the second housing shell (23).

2. Final drive (1) according to claim 1, **characterised in that** the first bearing projection (36) projects in the direction of a first outlet recess (31) of the transmission housing (16) or into the latter and the second bearing projection (37) projects in the direction of a second outlet recess (32) of the transmission housing (16) or into the latter.

3. Final drive (1) according to any of the preceding claims, **characterised in that** the first housing shell (22) and the second housing shell (23) are formed separately from one another and bear against one another in the contact plane (24) which lies in the axial plane or parallel thereto.

4. Final drive (1) according to any of the preceding claims, **characterised in that** the bearing element (35) is fixed on the one hand to the first housing shell (22) and on the other hand to the second housing shell (23) respectively by means of at least one screw (38), the longitudinal central axis of which is angled with respect to the contact plane (24) and/or is perpendicular thereto.

5. Final drive (1) according to any of the preceding claims, **characterised in that** the bearing element (35) on both sides of an imaginary plane, which is arranged to be perpendicular to the contact plane (24) and accommodates therein an intersection point (33, 34) of the axes of rotation (19, 20) of the output shafts (7, 10) with the axes of rotation (17, 18) of the input shafts (2, 4), is fixed respectively to the first housing shell (22) or the second housing shell (23).

6. Final drive (1) according to any of the preceding claims, **characterised in that** the first input shaft (2) and the second input shaft (4) as well as the first output shaft (7) and the second output shaft (10) are mounted respectively on or in the transmission housing (16).

7. Final drive (1) according to any of the preceding claims, **characterised in that** the first input shaft (2) and the second input shaft (4) are mounted on opposite sides of the ring gear transmission (6, 9) and/or are mounted in the transmission housing (16).

8. Final drive (1) according to any of the preceding claims, **characterised in that** at least one bearing arrangement (42) for supporting the first ring gear (13) on the first bearing projection (36) and a second bearing arrangement (42) for supporting the second ring gear (15) are arranged on the second bearing projection (37) and/or are fixed in at least one direction by means of a respective fastening means (51), in particular a snap ring.

9. Final drive (1) according to any of the preceding claims, **characterised in that** the bearing element (35) is made in one piece and/or from one material.

## Revendications

1. Pont(1) pour un véhicule automobile, avec un premier arbre d'entrée (2), un second arbre d'entrée (4), un premier arbre de sortie (7) et un second arbre de sortie (10), dans lequel le premier arbre d'entrée (2) est couplé en permanence au premier arbre de sortie (7) au moyen d'une première transmission à couronne dentée (6) et le second arbre d'entrée (4) est couplé en permanence au second arbre de sortie (10) au moyen d'une seconde transmission à couronne dentée (9), dans lequel le premier arbre d'entrée (2) et le second arbre d'entrée (4) sont disposés coaxialement l'un par rapport à l'autre et le premier arbre de sortie (7) et le second arbre de sortie (10) s'étendent dans des directions opposées à partir de la transmission à couronne dentée respective (6, 9), et dans lequel des axes de rotation (17, 18) des deux arbres d'entrée (2, 4) et des axes de rotation (19, 20) des deux arbres de sortie (7, 10) sont situés dans un plan axial (21), et un plan perpendiculaire au plan axial (21) et contenant les axes de rotation (17, 18) des deux arbres d'entrée (2, 4) avec les axes de rotation (19, 20) des arbres de sortie (7, 10) renferme respectivement un angle d'au moins 75° et d'au plus 90°, dans lequel un élément de palier (35) fixé au carter de boîte de vitesses (16) est disposé dans un carter de boîte de vitesses (16) du pont (1) qui présente une première saillie de palier (36) et une seconde saillie de palier (37), dans lequel une première couronne dentée (13) de la première transmission à couronne dentée (6) connectée de manière rigide au premier arbre de sortie (7) sur la première saillie de palier (36) et sur la seconde saillie de palier (37) est montée une seconde couronne dentée (15) de la seconde transmission à couronne dentée (9) solidaire du second arbre de sortie (10), **caractérisé en ce que** le carter de boîte de vitesses (16) est conçu en plusieurs parties et présente une première coque de carter (22) et une seconde coque de carter (23), dans lequel l'élément de palier (35) formé séparément du carter de boîte de vitesses (16) sur les côtés opposés d'un plan de contact (24) est fixé d'une part sur la première coque de carter (22) et d'autre part sur la seconde coque de carter (23).

2. Pont (1) selon la revendication 1, **caractérisé en ce que** la première saillie de palier (36) fait saillie en direction d'un premier évidement de sortie (31) du carter de boîte de vitesses (16) et la seconde saillie de palier (37) fait saillie en direction d'un second évidement de sortie (32) du carter de boîte de vitesses (16) ou fait saillie dans ce dernier.

3. Pont (1) selon l'une quelconque des revendications précédentes, **caractérisé en ce que** la première coque de carter (22) et la seconde coque de carter (23) sont formées séparément l'une de l'autre et reposent l'une contre l'autre dans le plan de contact (24) qui est situé dans le plan axial ou parallèlement à celui-ci.

4. Pont (1) selon l'une quelconque des revendications précédentes, **caractérisé en ce que** l'élément de palier (35) est fixé d'une part à la première coque de carter (22) et d'autre part à la seconde coque de carter (23), respectivement au moyen d'au moins une vis (38) dont l'axe central longitudinal est incliné par rapport au plan de contact (24) et/ou perpendiculaire à celui-ci.

5. Pont (1) selon l'une quelconque des revendications précédentes, **caractérisé en ce que** l'élément de palier (35) est fixé sur la première coque de carter (22) ou sur la seconde coque de carter (23), de part et d'autre d'un plan imaginaire qui est disposé perpendiculairement au plan de contact (24) et qui reçoit en lui-même un point d'intersection (33, 34) des axes de rotation (19, 20) des arbres de sortie (7, 10) avec les axes de rotation (17, 18) des arbres d'entrée (2, 4).

6. Pont (1) selon l'une quelconque des revendications précédentes, **caractérisé en ce que** le premier arbre d'entrée (2) et le second arbre d'entrée (4) ainsi que le premier arbre de sortie (7) et le second arbre de sortie (10) sont respectivement montés sur ou dans le carter de boîte de vitesses (16).

7. Pont (1) selon l'une quelconque des revendications précédentes, **caractérisé en ce que** le premier arbre d'entrée (2) et le second arbre d'entrée (4) sont montés sur et/ou dans le carter de boîte de vitesses (16) sur des côtés opposés de la transmission à couronne dentée (6, 9).

8. Pont (1) selon l'une quelconque des revendications précédentes, **caractérisé en ce qu'au** moins un dispositif de palier (42) pour le montage de la première couronne dentée (13) est disposé sur la première saillie de palier (36) et un second dispositif de palier (42) pour le montage de la seconde couronne dentée (15) est disposé sur la seconde saillie de palier (37) et/ou est fixé dans au moins une direction par un moyen de fixation respectif (51), en particulier un anneau de retenue.

9. Pont (1) selon l'une quelconque des revendications précédentes, **caractérisé en ce que** l'élément de palier (35) est réalisé d'un seul tenant et/ou d'un seul matériau.
